# EUROPÄISCHE PATENTSCHRIFT

(11) **EP 1 382 238 B1**
(45) Veröffentlichungstag und Bekanntmachung des Hinweises auf die Patenterteilung: **12.12.2007**
(21) Anmeldenummer: 03016183.0
(22) Anmeldetag: 17.07.2003
(51) Int. Cl.: A01D 90/14, A01C 3/06

(54) **Landmaschine mit stufenlosem Kegelscheibengetriebe**
Agricultural machine with continuously variable cone pulley transmission
Dispositif agricole avec variateur continu à poulies coniques

(30) Priorität: 19.07.2002 DE 10232804
(43) Veröffentlichungstag der Anmeldung: 21.01.2004
(73) Patentinhaber: PIV Drives GmbH, 61352 Bad Homburg (DE)
(72) Erfinder: Schönnenbeck, Gert, 61267 Neu-Anspach (DE)
(74) Vertreter: Petersen, Frank

(56) Entgegenhaltungen:
- EP-A- 0 212 186
- DE-A- 3 325 523
- DE-A- 3 504 763
- DE-A- 3 715 336
- DE-A- 4 338 325
- GB-A- 752 102
- GB-A- 839 868
- US-A- 4 196 859

## Beschreibung

Die Erfindung betrifft eine Landmaschine mit einem Antriebsstrang zum Ankoppeln an die Zapfwelle eines Traktors, mit einem in den Antriebsstrang integrierten stufenlosen Kegelscheibenumschlingungsgetriebe.

In der Landwirtschaft gibt es eine Vielzahl von Landmaschinen, die an einen Traktor bzw. Schlepper angebaut werden und die zu ihrem Betrieb die Leistung von der Zapfwelle des Schleppers oder Traktors erhalten. Um dabei die Leistung innerhalb der Landmaschine an die Stelle zu bringen, an der sie letztlich benötigt wird, haben diese Landmaschinen einen Antriebsstrang, der entsprechend an die Zapfwelle des Traktors angekoppelt wird. Es ist dabei auch bekannt, in diesen Antriebsstrang ein Übersetzungsgetriebe zu integrieren, um so sicherstellen zu können, dass die von der Zapfwelle gelieferte Antriebsleistung zu einer bestmöglichen Arbeitsgeschwindigkeit der Landmaschine genutzt wird. Dies gilt z. B. für Verteilarbeiten, Mischarbeiten, Aufnehmen von Materialien etc.

Ein entsprechendes Stand der Technik findet sich beispielsweise in der US - A - 4 196 859.

Häufig werden derartige Landmaschinen mit einfachen, insbesondere im Stillstand schaltbaren Getrieben versehen. Diese haben jedoch den Nachteil, dass eine einmal gewählte Übersetzung dann auch für den gesamten Arbeitsprozess verwendet werden muss. Problematisch ist dies insbesondere dann, wenn eine besonders hohe Übersetzung insbesondere nur zum Anfahren der Landmaschine benötigt wird.

Eine derartige Problematik tritt beispielsweise auf bei Düngerstreuern oder sogenannten Vertikalmischern. Vertikalmischer werden beispielsweise zur Aufbereitung von Viehfutter verwendet. Ein derartiger Vertikalmischer hat dabei in einem Vorratsbehälter eine Mischwendel angeordnet, über die in dem Vorratsbehälter befindliches Futtermaterial etc. zu einer Ausgangsöffnung transportiert wird. Bei einem solchen Vertikalmischer wird der Vorratsbehälter aus einem Silo befüllt, wobei die Mischwendel umläuft. Um dann von dem Silo zu der Ausbringstelle für z. B. Viehfutter zu fahren, wird die gesamte Leistung des Schleppers für den Vortrieb beim Fahren benötigt. Demgemäss wird die Zapfwelle, über die die Mischwendel des Vertikalmischers angetrieben wird, vom Motor des Schleppers getrennt, so dass sie keine Leistung mehr abzweigt und die gesamte Motorleistung somit für den Fahrbetrieb des Traktors zur Verfügung steht. - Während der Fahrt steht die Mischwendel des Vertikalmischers somit still.

Durch den Fahrbetrieb mit dem dabei verbundenen Rütteln des Vertikalmischers setzt sich das in diesen eingefüllte Futtermaterial. An der Stelle, an der das Viehfutter dann über die Mischwendel ausgebracht werden soll, muss aufgrund des aufgetretenen Setzens das Futtermaterial somit erst wieder "losgebrochen" werden.

Nach dem hierfür notwendigen somit hohen Anlaufdrehmoment fällt die danach benötigte Antriebsleistung für die Mischwendel beim weiteren Ausbringen des Futters dann deutlich ab. Es bestünde somit also grundsätzlich die Möglichkeit, nach dem "Losbrechen" des Futtermaterials mit einer niedrigeren Übersetzung weiterzuarbeiten.

Bei den bisher verwandten einfachen, nur im Stillstand zu schaltenden Getrieben bedeutet dies aber, dass der Antriebsstrang wieder in den Stillstand zu bringen ist und dann nach Einlegen einer niedrigeren Übersetzung erneut anzufahren ist. Auch hierbei ist wieder ein anfänglich höheres "Losbrech"-Drehmoment zu überwinden, das den Antriebsstrang stark belastet.

Auch dann verbleibt die Problematik, dass die beim erneuten Losbrechen notwendige Übersetzung danach weiter beibehalten werden muss, so dass beim weiteren Ausbringen von Futter mit einer weiterhin zu hohen Übersetzung gefahren wird. Die Fahrgeschwindigkeit ist damit nicht optimal und das Ausbringen von Futter, Düngemitteln etc. dauert letztlich unnötig lange.

Aufgabe der vorliegenden Erfindung ist es daher, eine Landmaschine wie oben angegeben derart weiterzubilden, dass mit ihr ein leistungs- und zeit-optimierter Arbeitsvorgang erreicht werden kann.

Die Landmaschine soll dabei insbesondere auch zu einer robusten Konstruktion führen, die den harten Anforderungen im landwirtschaftlichen Betrieb gerecht wird.

Diese Aufgabe wird erfindungsgemäß gelöst, mit einer Landmaschine gemäß dem Hauptanspruch.

Ein stufenloses Kegelscheibenumschlingungsgetriebe hat dabei die Möglichkeit, auch unter Last verstellbar zu sein, womit sichergestellt ist, dass für die Einstellung eines bestmöglichen Übersetzungsverhältnisses des Getriebe keine (erneute) Unterbrechung des Antriebes einer Mischwendel etc. notwendig ist, die zu einem erneuten Setzen mit anschließend notwendigem erneutem Losbrechen von Material z. B. in einem Vertikalmischer, einem Düngemittelstreuer etc. führen würde.

Man hat somit die Möglichkeit, die für das Ausbringen von Futter- oder Düngemittel oder für andere Arbeiten von Landmaschinen benötigte Leistung bestmöglich auf den tatsächlichen Bedarf einzustellen, wobei gleichzeitig eine maximale Arbeitsgeschwindigkeit und damit eine möglichst kurze Dauer für eine Arbeit zu erreichen ist. Hieraus ergeben sich entsprechende Zeit- und Kostenvorteile bei der Anwendung einer derartigen Landmaschine.

Jetzt ist es für einen optimalen Einsatz in der Landwirtschaft wesentlich, dass ein Bediener einer entsprechenden Landmaschine soweit wie möglich entlastet wird. Dies bedeutet aber auch, dass es vorteilhaft ist, wenn ein Antriebsstrang mit einem entsprechenden stufenlosen Getriebe in jeder Übersetzungsstellung des Getriebes abgeschaltet werden kann ohne erst noch in eine später notwendige Anfahrstellung verbracht zu werden.

Um dies zu ermöglichen, wird vorgeschlagen, in dem Antriebsstrang eine Stillstandsverstellung in Anfahrübersetzung zu integrieren, so wie einen entsprechenden Kraftflussunterbrecher. Der Kraftflussunterbrecher ist dabei notwendig, da bei der Stillstandsverstellung das Getriebe nicht belastet sein darf.

Vorteilhafterweise wird hierbei als Kraftflussunterbrecher eine Kupplung vorgesehen. Es ist aber auch möglich, hier einen Hydraulikwandler oder ähnliches zu verwenden.

Um den Bedienkomfort und damit die ergonomische Bedienbarkeit zu erhöhen wird vorgeschlagen, die Kupplung hydraulisch zu betätigen, da auch das Kegelscheibenumschlingungsgetriebe vollhydraulisch ist. Es wäre aber auch grundsätzlich im Rahmen der Erfindung, die Kupplung rein mechanisch, das heißt insbesondere manuell verstellbar auszuführen.

Es ist erfindungsgemäß vorgesehen, die Landmaschine selbst mit wenigstens einer Hydraulikpumpe zu versehen, die den hydraulischen Druck an das vollhydraulische Kegelscheibenumschlingungsgetriebe und/oder die hydraulisch zu betätigende Kupplung liefert. Damit belastet die Landmaschine im Betrieb nicht den Hydraulikkreislauf des sie antreibenden Traktors.

Die Hydraulikpumpe der Landmaschine wird auch von der Zapfwelle des Traktors angetrieben, damit hier kein separater, konstruktiv aufwendiger anderer Antrieb vorzusehen ist.

Bei einer bevorzugten Ausführungsform weist die Landmaschine noch eine Steuerung auf, mit der die Kupplung und die Stillstandverstellung zeitversetzt zueinander zu betätigen sind. Damit kann sichergestellt werden, dass die Stillstandsverstellung erst betätigt wird, wenn die Kupplung geöffnet ist und die Kupplung später erst wieder geschlossen wird, wenn die Stillstandsverstellung die Anfahrübersetzung des Kegelscheibenumschlingungsgetriebes erreicht hat.

Um letztere präzise ermitteln zu können, wird vorgeschlagen, der Steuerung wenigstens einen Positionserkennungssensor zuzuordnen, mit der eine der verschieblichen Kegelscheiben des Kegelscheibenumschlingungsgetriebes überwacht wird. Wenn diese eine Endposition erreicht hat, wird das Schließen der Kupplung und damit eine Leistungsübertragung über das Getriebe wieder durch die Steuerung eingeschaltet.

Insbesondere ist die Kupplung dabei an die Hydraulikversorgung des Kegelscheibenumschlingungsgetriebes angeschlossen, wobei sichergestellt wird, dass sie erst dann Drehmoment überträgt, wenn im Anpresssystem des Kegelscheibenumschlingungsgetriebe ein Minimaldruck aufgebaut ist. Die Kupplung wird im übrigen durch Betätigung des Schalters zur Lieferung eines Eingabesignals an die Steuerung geöffnet. Gleichzeitig oder zeitversetzt etwas später wird dabei durch die Steuerung ein Stillstandsverstellventil geöffnet. Dieses ermöglicht dann die Stillstandsverstellung des vollhydraulischen Kegelscheibenumschlingungsgetriebes in die Anfahrstellung.

Bei Erreichen einer Endposition oder bei manueller Aufhebung des oben erwähnten Eingangssignals, das die Stillstandsverstellung auslöst, wird das Stillstandsverstellventil wieder geschlossen und die Kupplung wird erst zu diesem oder einem etwas späteren Zeitpunkt wieder mit Drucköl beaufschlagt.

Diese Abfolge kann entweder durch einen in der Steuerung vorhandenen Mikroprozessor gesteuert werden oder auch durch ein separates, in dieser vorhandenes einstellbares Zeitrelais.

Dabei kann das entsprechende Hydraulikventil, mit dem die Kupplung geöffnet wird, sowohl elektrohydraulisch sein als auch vom dann wiederum elektrohydraulischen Stillstandverstellventil hydraulisch angesteuert werden.

Es wird dabei über die Steuerung insbesondere sichergestellt, dass erst nach Beendigung der Stillstandverstellung das Einleiten des Wiederanfahrvorganges ermöglicht ist.

Weitere Vorteile und Merkmale der Erfindung ergeben sich aus der nachfolgenden Beschreibung eines Ausführungsbeispiels. Dabei zeigt
- Figur 1: die Prinzipskizze einer erfindungsgemäßen Landmaschine hinter einem Traktor;
- Figur 2: den Hydraulikplan für ein stufenloses Kegelscheibenumschlingungsgetriebe mit Mikroprozessor oder Zeitrelais geschalteten Stillstandsverstell- und Kupplungsentlastungsventilen und;
- Figur 3: den Hydraulikplan eines stufenlosen Kegelscheibenumschlingungsgetriebe mit durch ein Stillstandsverstellventil hydraulisch angesteuertem Kupplungsentlastungsventil.

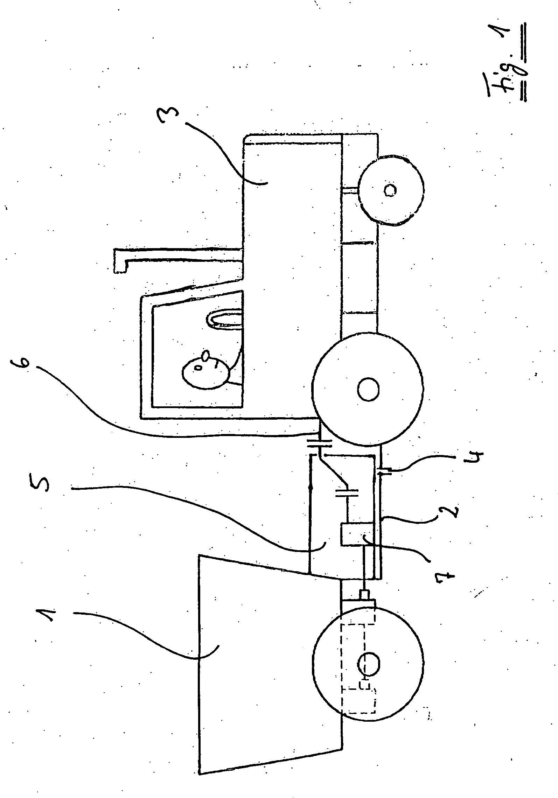

In Figur 1 erkennt man in einer Prinzipskizze eine Landmaschine 1, die über eine übliche Deichsel 2 o. ä. an eine Anhängerkupplung 4 eines Traktors 3 angekoppelt ist. Außer einer wie hier dargestellten nachgeschleppten Landmaschine können auch direkt an den Traktor angebaute Landmaschinen vorgesehen sein.

Die Landmaschine weist dabei einen Antriebsstrang 5 auf, der an eine Zapfwelle 6 des Traktors 3 angekoppelt ist.

Diese Zapfwelle 6 dient bei dem Traktor zur Lieferung von Leistung an Landmaschinen oder -geräte, die an den Traktor 3 angebaut werden. Sie ist geschaltet oder starr gegebenenfalls über ein Vorlegegetriebe an den Motor des Traktors 3 gekoppelt.

Vom Motor des Traktors gelieferte Leistung wird somit über die Zapfwelle 6 und den Antriebsstrang 5 in die Landmaschine 1 geleitet. Damit steht diese Leistung in einer derartigen Situation nicht zum Vortrieb von Traktor und angehängter Landmaschine zur Verfügung. Um jetzt zu ermöglichen, dass in die Landmaschine keine dort gegebenenfalls bei einem Fahren des Traktors über Landstraßen etc. nicht benötigte Leistung geleitet wird, kann der Antriebsstrang 5 und/oder die Zapfwelle 6 während eines Straßentransports z. B. über eine Kupplung vom Motor abgekoppelt werden. Die Leistung des Motors des Traktors 3 steht dann voll für den Fahrbetrieb zur Verfügung.

Bei einem Straßentransport kann es aber dann dazu kommen, dass sich gegebenenfalls in der Landmaschine 1 befindliches Futter, Düngemittel oder andere Streumittel aufgrund von Rütteln so stark verdichten, dass ein anschließendes Anfahren der Landmaschine eine hohes Anfahrdrehmoment erfordert, wozu ein im Antriebsstrang 5 vorhandenes Übersetzungsgetriebe 7 entsprechend eingestellt wird.

Da derartige Übersetzungsgetriebe in Landmaschinen recht einfach ausgebildet werden, ist eine anschließende Schaltung unter Last nicht mehr möglich. Damit verbleibt das Getriebe 7 in einer entsprechend vorgewählten Übersetzung und bei einem anschließenden Fahren des Traktors wird die mögliche Fahrleistung und damit die Geschwindigkeit durch die eingestellte Übersetzung des Übersetzungsgetriebes 7 bestimmt und nach oben begrenzt.

Um diese Problematik zu umgehen, wird für das Übersetzungsgetriebe bei der hier vorgeschlagenen Ausführungsform ein Kegelscheibengetriebe mit stufenlos ein- und verstellbarer Übersetzung verwandt, das zur Erzeugung axialer Anpresskräfte von Kegelscheiben auf ein Zugmittel über hydraulische Spannmittel verfügt, die über ein entsprechendes Steuerventil mit Druckmittel beaufschlagt werden.

Eine derartige Vorrichtung ermöglicht auch unter Last eine Einstellung des Übersetzungsgetriebes 7 auf ein Übersetzungsverhältnis, bei dem eine bestmögliche Aufteilung der Leistung des Motors des Traktors 3 für den Vortrieb einerseits und den Antrieb der Landmaschine 1 andererseits zu erreichen ist.

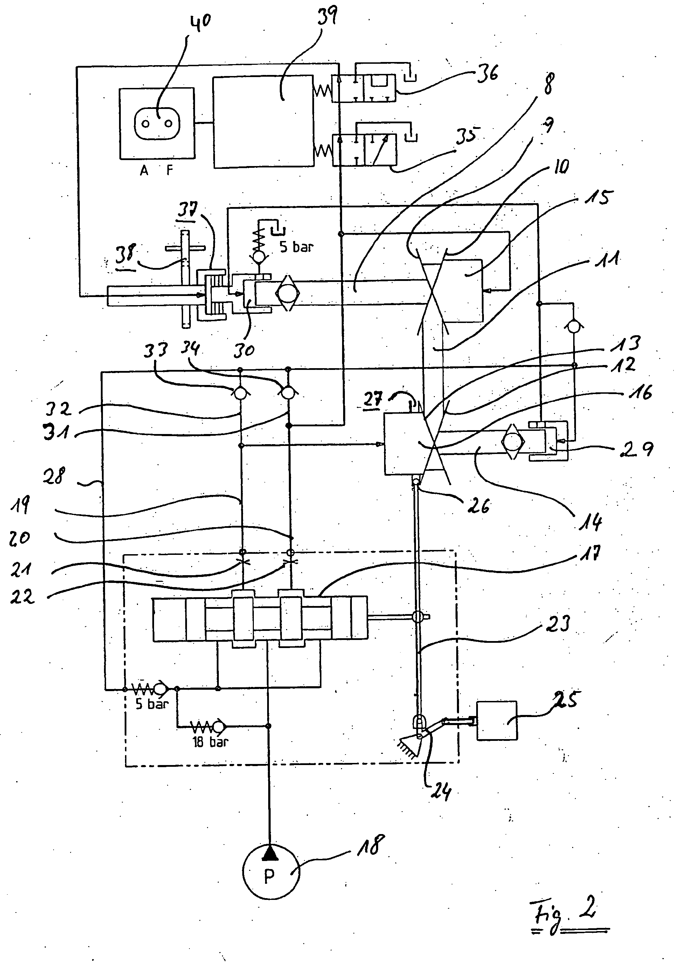

In der Figur 2 ist zu einem entsprechenden stufenlos verstellbaren Kegelscheibengetriebe ein entsprechender Hydraulikplan dargestellt:

Von der Zapfwelle (nicht dargestellt) wird über eine Antriebswelle 8 ein antriebsseitiger Scheibensatz 9, 10 eines Kegelscheibengetriebes angetrieben. Dieser steht über ein Zugmittel 11 in Verbindung mit einem abtriebsseitigen Scheibensatz 12, 13, der auf einer Abtriebswelle 14 sitzt. Durch diese Abtriebswelle wird die Landmaschine angetrieben (nicht dargestellt).

Auf jeder Welle 8, 14 ist eine der Kegelscheiben, nämlich die Kegelscheiben 10, 13 zur Einstellung der Getriebeübersetzung axial verschiebbar, wozu sie in an sich bekannter Weise als Zylindermäntel 15, 16 von hydraulischen Druckzylindern ausgebildet sind, deren Kolben wellenfest angeordnet sind.

Somit ist in den axial verschiebbaren Kegelscheiben 10, 13 je ein hydraulisches Spannmittel ausgebildet, dem Druckmittel über einen Vierkantensteuerschieber 17 zugeteilt wird.

Dazu wird von einer Druckmittelpumpe 18, die auf hier nicht dargestellte Weise ebenfalls von der Zapfwelle 6 angetrieben wird, Hydraulikflüssigkeit auf den Steuerschieber 17 gegeben, von wo aus es dann entsprechend der Stellung des Schiebers über Leitungen 19, 20 den hydraulischen Spannmitteln auf den beiden Getriebeseiten zugeteilt wird. Dabei fließt das Hydraulikmittel über an und für sich bekannte Zylinderdrosseln 21, 22.

Die Einstellung des Steuerschiebers 17 erfolgt über einen Abtasthebel 23, dessen eines Ende über einen Kipphebel 24 von einem Übersetzungsstellgerät 25 verstellt wird. An seinem anderen Ende wird der Abtasthebel 23 mit einem Gleitstein 26 in einer Umfangsnut 27 geführt, die an der axial verschiebbaren Kegelscheibe 13 ausgebildet ist.

Das vom Vierkantensteuerschieber 17 abfließende Hydraulikmittel fließt über eine Fühlerleitung 28 zu Drehmomentfühlern 29, 30. Diese Drehmomentfühler sind so ausgebildet, dass sie beim Auftreten von Drehmomentstößen eine bestimmte Druckmittelmenge in die Leitung 28 zurückpumpen, um auf diese Weise einem plötzlichen Druckmittelbedarf zur Abstützung des Drehmomentstoßes an den an- und abtriebsseitig axial verstellbaren Kegelscheiben 10 bzw. 13 des Kegelscheibengetriebes Rechnung zu tragen.

Damit diese Druckmittelmengen schnellstmöglich an den genannten axial verschiebbaren Kegelscheiben zur Verfügung steht, befinden sich zwischen der Leitung 28 und den Leitungen 19 und 20 Leitungsverbindungen 31, 32 mit Rückschlagventilen 33, 34, über die die von den Drehmomentfühlern 29 bzw. 30 gelieferten Hydraulikmittelmengen beim Auftreten von Drehmomentstößen strömen.

Die Verstellung dieses Getriebes erfolgt durch eine Einstellung des Übersetzungsstellgerätes 25, was zu einer Auslenkung des Abtasthebels 23 führt. Über diesen wird der Vierkantensteuerschieber so lange ausgelenkt, bis die entsprechende Übersetzung an dem Kegelscheibengetriebe eingestellt ist, wobei dies über die Abtastung der Position der Kegelscheibe 13 über den Gleitstein 26 an deren Umfangsnut 27 überprüft wird. Bei Erreichung der Endstellung wird der Steuerschieber 17 dann wieder über den Abtasthebel 23 in seine ursprüngliche Position zurückgestellt.

Problematisch wird es jetzt, wenn der Antrieb des Getriebes in einer beliebigen Übersetzung abgestellt wird. Zum Anfahren muss das Kegelscheibenumschlingungsgetriebe dann nämlich in eine Anfahrposition verbracht werden. Dies ist jedoch bei Kegelscheibengetrieben bei normalen Anpressverhältnissen praktisch nicht möglich. Dies hat seinen Grund darin, dass bei Kegelscheibengetrieben der hier beschriebenen Art der Widerstand gegen Verstellbewegungen bei abnehmender Umlaufgeschwindigkeit des Zugmittels stark ansteigt und somit bei Stillstand des Getriebes ein Maximum erreicht.

Um diese Problematik zu lösen, ist es bekannt, eine Stillstandsverstellung des Kegelscheibengetriebes vorzunehmen, bei der der Hydraulikmitteldruck von den Spannmitteln fortgenommen wird.

In dem in der Figur.2 dargestellten Ausführungsbeispiel ist hierzu ein entsprechendes Stillstandverstellventil 35 vorgesehen. Durch Betätigung dieses Ventiles wird im hier dargestellten Beispiel insbesondere auf der Antriebsseite die Scheibe 10 druckentlastet, so dass das Zugmittel 11 auf einen anderen Übersetzungsumfang eingestellt werden kann. Im hier dargestellten Beispiel ist außerdem noch ein Kupplungsentlastungsventil 36 vorgesehen, das bei Betätigung dazu führt, dass eine hydraulische Lamellenkupplung 37 geöffnet wird, die bei geschlossener Stellung die Rotation der Antriebswelle 8 bewirkt. Dabei ist der Antrieb auf der Antriebsseite der hydraulischen Lamellenkupplung über ein entsprechendes Vorlegegetriebe 38 entsprechend variabel.

Es sei hier noch vermerkt, dass im hier dargestellten Beispiel das Stillstandverstellventil 35 und das Kupplungsentlastungsventil 36 elektromagnetisch betätigt werden durch einen Mikroprozessor 39.

Die hydraulische Lamellenkupplung 37 ist in die Hydraulikversorgung des Kettenwandlers eingebunden, so dass sie erst schließt und somit ein Drehmoment überträgt, wenn der Anpressdruck des Kettenwandlers einen Minimaldruck aufgebaut hat.

Durch Betätigung eines Schaltknopfes 40 wird die Kupplung geöffnet, wobei der Mikroprozessor 39 das Kupplungsentlastungsventil 36 betätigt. Gleichzeitig oder zeitversetzt etwas später wird dann vom Mikroprozessor 39 das Stillstandverstellventil 35 betätigt, was dann die Stillstandverstellung einleitet.

Erst bei Rücksetzen des Schaltknopfes 40 wird dann durch den Mikroprozessor 39 die Kupplung 37 geschlossen durch Betätigung des Kupplungsentlastungsventils 36. Gleichzeitig oder zeitversetzt etwas früher wird das Stillstandsventil 35 durch den Mikroprozessor 39 betätigt, was zum Aufbau des Druckmitteldruckes in der Hydraulik des Kegelscheibengetriebes führt.

Es ist hier nicht dargestellt, dass die Beendigung der Stillstandverstellung durch ein Signal an den Mikroprozessor 39 bekanntgegeben werden kann, wobei ein entsprechendes Signal durch einen nicht dargestellten Nährungsschalter geliefert wird, der bei Erreichen der Anfahrposition einer der Wegscheiben 10 oder 13 ein entsprechendes Signal liefert. Statt dessen kann auch eine Mindestzeit am Mikroprozessor eingestellt werden, in der die Stillstandverstellung durchgeführt wird. Bei Ablauf dieser Mindestzeit kann ein entsprechendes Signal erzeugt werden, dass die Stillstandsverstellung abgeschlossen ist.

Erst die somit definitive Beendigung der Stillstandverstellung ermöglicht es dem Mikroprozessor 39 dann, den Wiederanfahrvorgang einzuleiten.

Außer einem Mikroprozessor kann auch ein einstellbares Zeitrelais verwandt werden, das durch den Schalter 40 entsprechend betätigt wird.

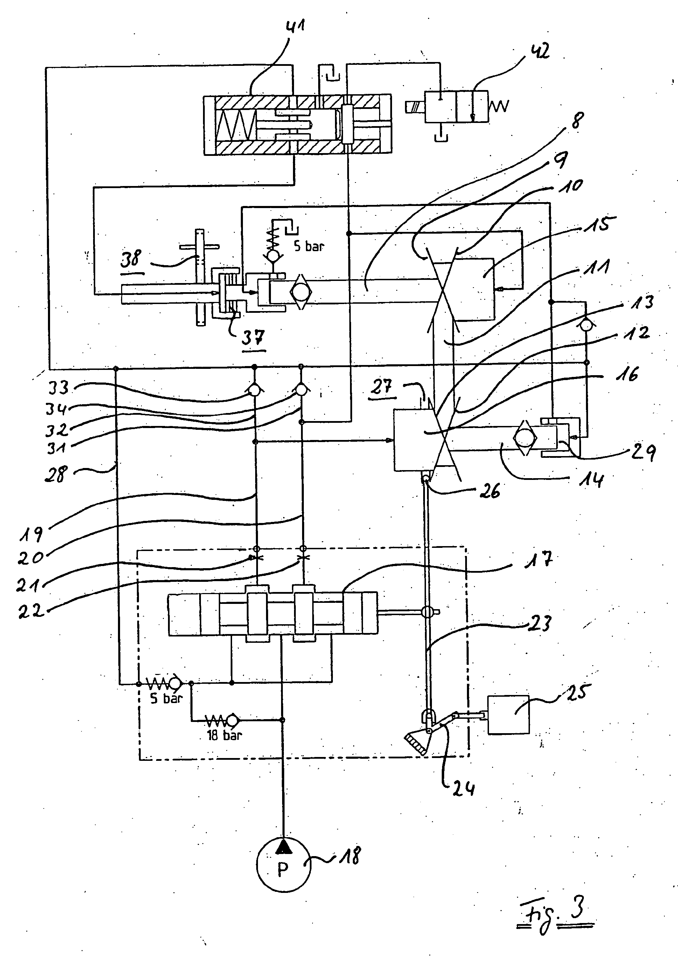

In der Figur 3, bei der gleiche Teile mit gleichen Bezugszeichen versehen wurden, ist statt einer Mikroprozessorsteuerung für das Kupplungsentlastungsventil bzw. das Stillstandverstellventil ein hydraulisch betätigtes Kupplungsentlastungsventil 41 vorgesehen, das durch ein elektrohydraulisches Stillstandverstellventil 42 angesteuert wird.

Auch hier ist gewährleistet, dass die hydraulisch betätigte Kupplung bei Betätigung des Stillstandverstellventils gelöst und bei Rückstellung des Stillstandverstellventils wieder eingerückt wird.

## Patentansprüche

1. Landmaschine mit einem Antriebsstrang (5) zum Ankoppeln an die Zapfwelle (6) eines Traktors (3), mit einem in den Antriebstrang (5) integrierten stufenlosen Kegelscheibenumschlingungsgetriebe,
**dadurch gekennzeichnet,**
**dass** das Kegelscheibenumschlingungsgetriebe vollhydraulisch ist und dass die Landmaschine wenigstens eine Hydraulikpumpe (18) aufweist, zur Lieferung von hydraulischem Druck an das Kegelscheibenumschlingungsgetriebe,
wobei die Hydraulikpumpe (18) von der Zapfwelle (6) angetrieben ist.

2. Landmaschine gemäß Anspruch 1,
**dadurch gekennzeichnet,**
**dass** dem Kegelscheibenumschlingungsgetriebe im Antriebsstrang (5) ein Kraftflussunterbrecher (37) zugeordnet ist sowie eine Stillstandsverstellung in Anfahrübersetzung.

3. Landmaschine gemäß Anspruch 2,
**dadurch gekennzeichnet,**
**dass** der Kraftflussunterbrecher eine Kupplung (37) ist.

4. Landmaschine gemäß Anspruch 3,
**dadurch gekennzeichnet,**
**dass** die Kupplung (37) hydraulisch zu betätigen ist.

5. Landmaschine gemäß Anspruch 2,
**dadurch gekennzeichnet,**
**dass** eine Steuerung (39) vorgesehen ist zum zeitversetzten Ansteuern der Kupplung (37) und der Stillstandverstellung (35, 42).

6. Landmaschine gemäß Anspruch 5,
**dadurch gekennzeichnet,**
**dass**;der Steuerung wenigstens ein Positionserkennungssensor für eine Kegelscheibe (10, 13) zugeordnet ist.

## Claims

1. Agricultural machine with a drive train (5) for coupling to the power take-off shaft (6) of a tractor (3), with a continuously variable cone pulley contact transmission integrated into the drive train (5), **characterised in that** the cone pulley contact transmission is fully hydraulic and that the agricultural machine has at least one hydraulic pump (18) for the delivery of hydraulic pressure to the cone pulley contact transmission, the hydraulic pump (18) being driven by the power take-off shaft (6).

2. Agricultural machine as claimed in Claim 1, **characterised in that** a power-flow interrupter (37) in the drive train (5) as well as a shutdown adjustment in the starting transmission are associated with the cone pulley contact transmission.

3. Agricultural machine as claimed in Claim 2, **characterised in that** the power-flow interrupter is a clutch (37).

4. Agricultural machine as claimed in Claim 3, **characterised in that** the clutch (37) is to be actuated hydraulically.

5. Agricultural machine as claimed in Claim 2, **characterised in that** a control means (39) is provided for controlling the clutch (37) and the shutdown adjustment (35, 42) with a time delay.

6. Agricultural machine as claimed in Claim 5, **characterised in that** at least one position detection sensor for a cone pulley (10, 13) is associated with the control means.

## Revendications

1. Dispositif agricole avec une chaîne cinématique (5) destinée à être accrochée à la prise de force (6) d'un tracteur (3), avec un variateur continu à poulies coniques intégré dans la chaîne cinématique (5),
**caractérisé en ce**
**que** le variateur continu à poulies coniques est entièrement hydraulique et en ce que
le dispositif agricole présente au moins une pompe hydraulique (18) pour alimenter le variateur continu à poulies coniques avec une pression hydraulique,
la pompe hydraulique (18) étant commandée par la prise de force (6).

2. Dispositif agricole selon la revendication 1,
**caractérisé en ce**
**qu'**un interrupteur de flux de force (37) est associé au variateur continu à poulies coniques dans la chaîne cinématique (5), ainsi qu'un mécanisme de réglage d'arrêt dans le rapport de démarrage.

3. Dispositif agricole selon la revendication 2,
**caractérisé en ce**
**que** l'interrupteur de flux de force est un accouplement (37).

4. Dispositif agricole selon la revendication 3,
**caractérisé en ce**
**que** l'accouplement (37) doit être commandé de manière hydraulique.

5. Dispositif agricole selon la revendication 2,
**caractérisé en ce**
**qu'**une commande (39) est prévue pour commander de manière différée l'accouplement (37) et le mécanisme de réglage d'arrêt (35, 42).

6. Dispositif agricole selon la revendication 5,
**caractérisé en ce**
**qu'**au moins un capteur de détection de position pour une poulie conique (10, 13) est associé à la commande.
